# FASCICULE DE BREVET EUROPEEN

(11) **EP 1 483 959 B1**
(45) Date de publication et mention de la délivrance du brevet: **21.10.2009**
(21) Numéro de dépôt: 04013147.6
(22) Date de dépôt: 03.06.2004
(51) Int. Cl.: A01K 31/18

(54) **Dispositif d'élevage de volailles ou gibier à plumes**
Zuchtvorrichtung für Geflügel und Federwild
Rearing device for poultry and game birds

(30) Priorité: 05.06.2003 FR 0306820
(43) Date de publication de la demande: 08.12.2004
(73) Titulaire: Le Bihan, Loic, 41300 Souesmes (FR); Le Bihan, Yvan, 41300 Souesmes (FR)
(72) Inventeur: Le Bihan, Loic, 41300 Souesmes (FR); Le Bihan, Yvan, 41300 Souesmes (FR)
(74) Mandataire: Bentz, Jean-Paul

(56) Documents cités:
- FR-A- 2 151 537
- GB-A- 350 602
- GB-A- 1 086 335
- US-A- 1 921 352

## Description

La présente invention concerne un dispositif d'élevage de volaille ou gibier à plumes, permettant d'accueillir des poussins de ces volatiles afin d'en faire l'élevage.
Traditionnellement, ce genre d'élevage s'effectue à l'intérieur de bâtiments où l'éleveur est obligé de pénétrer, avec le risque d'apporter d'éventuelles maladies au groupe d'animaux situé dans un bâtiment, et de les transmettre d'un bâtiment d'élevage à l'autre. De plus, par sa présence et ses déplacements, l'éleveur risque de stresser ses poussins ou même, plus directement, de les blesser en les piétinant par mégarde. La pénétration de l'éleveur à l'intérieur du lieu de vie des poussins peut aussi entraîner une certaine accoutumance des oiseaux envers l'éleveur, ce qui peut s'avérer néfaste pour le gibier de chasse.
Par ailleurs, l'éleveur s'expose lui-même à divers éléments pouvant être source de problèmes de santé au cours de sa carrière, comme les poussières et les gaz émanant de la litière, ou encore l'exposition à un contraste de température élevé entre l'extérieur et l'intérieur du bâtiment d'élevage.
Egalement, ces bâtiments, qui sont de dimensions suffisamment importantes pour y permettre l'évolution de l'éleveur, sont de fait des constructions fixes, non déplaçables, ce qui fait que des groupes successifs de poussins sont élevés dans un même lieu, ce qui peut aussi provoquer des problèmes sanitaires, si le nettoyage est insuffisant, ou des coûts et temps importants pour réaliser les nettoyages et désinfections requis.
La nécessité pour l'éleveur de pénétrer dans ces bâtiments implique aussi une hauteur intérieure, du sol au plafond, qui est démesurée par rapport à la taille des poussins, et donc un volume inutilement important, d'où une consommation d'énergie importante pour maintenir ce volume à bonne température.
Enfin, le stockage des aliments se trouve généralement soit à l'intérieur du bâtiment dans des mangeoires, soit à l'extérieur dans des silos encombrants et peu en harmonie avec l'environnement.
Par ailleurs, on connaît aussi, par les documents US-A-1921352, US-A-2056814 et US-A-2105779, divers types de couveuses ou dispositifs destinés à l'élevage de poussins ou similaires, visant en particulier à assurer à l'intérieur de ces dispositifs des conditions de température et d'aération favorables de manière générale à un tel élevage, par le biais de parois isolantes ou chauffées, de trappes pivotantes permettant d'assurer une ventilation éventuellement régulée automatiquement, etc. Mais tous ces dispositifs sont de manière générale de construction complexe, d'accès malaisé pour un nettoyage et une désinfection efficace, et aucun de ces dispositifs ne permet d'assurer un élevage dans des conditions sanitaires optimales.

La présente invention a pour but de remédier aux divers inconvénients ci-dessus.
Avec ces objectifs en vue, l'invention a pour objet un dispositif d'élevage de poussins de volaille ou gibier à plumes suivant la revendication 1, constituée essentiellement d'une construction comportant une ossature, des parois extérieures, un toit central, des panneaux de toit articulés selon des axes sensiblement horizontaux et pivotant vers le haut en position d'ouverture pour donner accès à l'éleveur à l'intérieur de la construction sans qu'il ait besoin d'y pénétrer, ce dispositif étant caractérisé en ce que l'ossature comporte des tubes de structure verticaux situés dans les angles et sur lesquels se raccordent par emboîtement démontable les parois extérieures, au moins un des tubes de structure verticaux étant ouvert vers son extrémité supérieure pour y introduire de la nourriture qui est distribuée vers son extrémité inférieure conformée en mangeoire, et les panneaux de toit recouvrant en position basse les parois et les tubes de structure.

Les dimensions du dispositif sont adaptées à la taille et au nombre des poussins qu'il doit abriter. Ainsi, typiquement, le dispositif peut par exemple avoir une dimension de l'ordre de 4 X 4 m, et de 0,8 à 1 m de haut. Ces dimensions sont données uniquement à titre indicatif, et pourront bien sur être adaptées à chaque élevage. On notera cependant que le dispositif selon l'invention vise en particulier à limiter le volume intérieur, et donc sa hauteur, adaptée à l'élevage concerné, afin de limiter l'énergie nécessaire au maintien du volume intérieur à bonne température, tout en conservant une surface d'un même niveau suffisamment grande. Dans le même esprit, les parois extérieures, ainsi que le toit central et les panneaux de toit seront préférentiellement réalisés en un matériau, ou assemblage de matériaux, thermiquement isolant.

Les panneaux de toit articulés, peuvent aisément être soulevés pour que l'éleveur accède facilement à l'intérieur du dispositif tout en restant à l'extérieur, et donc sans y pénétrer, ce qui évite tout risque de déranger ou stresser les oiseaux, et évite aussi à l'éleveur l'inhalation néfaste de poussières et de gaz, ainsi que les chocs thermiques entre la température maintenue à l'intérieur du dispositif, qui peut être de l'ordre de 39°C, et la température ambiante à l'extérieur, très nettement moins élevée.

L'assemblage par emboîtement démontable des parois sur les tubes de structure permet un démontage aisé des parois, individuellement ou dans leur ensemble, ce qui permet au dispositif d'être facilement démonté, déplacé et remonté en un endroit différent, et permet aussi un nettoyage ou une interchangeabilité facile des parois. De plus, les parois sont réalisées préférentiellement de manière à être réversibles, c'est à dire à pouvoir retourner rapidement les parois, la face située à l'intérieure étant replacée vers l'extérieur, et inversement. Il est ainsi possible, par exemple lors d'un changement de groupe d'oiseaux, de présenter à l'intérieur du dispositif des parois ayant une surface propre , et de procéder à partir de l'extérieur au nettoyage des surfaces souillées, ceci permettant d'éviter une éventuelle contamination microbienne entre deux lots d'oiseaux successifs.

Le ou les tubes de structure qui sont ouverts en partie supérieure servent à la fois de stockage de nourriture et de mangeoire en partie basse. Leur remplissage par l'extérieur est des plus aisés, après avoir soulevé les panneaux de toits, qui par ailleurs, lorsqu'ils sont rabattus, assurent l'obturation des dits tubes, empêchant la pluie ou d'autres animaux d'y pénétrer.
Préférentiellement, les tubes de structure comportent une fenêtre verticale transparente située vers l'extérieur de la construction, pour visualiser le niveau de nourriture, ce qui permet de renseigner l'éleveur sur la quantité de nourriture restante, sans qu'il ait même besoin de soulever les panneaux de toit.
Selon une autre disposition, des rampes d'abreuvoir sont disposées le long de certaines au moins des parois à l'intérieur de la construction. Typiquement, ces rampes comportent des pipettes distribuant l'eau de manière automatique à la demande des poussins, de manière connue en soi. Ces rampes sont reliées par des tuyaux flexibles à des réservoirs d'eau, tels que des jerricans, placés à l'extérieur du dispositif et pouvant être aisément remplis ou remplacés.

Selon une disposition préférentielle, les parois extérieures sont liées aux tubes de structure par emboîtement de montants latéraux des dites parois dans des tubes de liaison fendus longitudinalement fixés à demeure sur les dits tubes de structure, parallèlement à ceux-ci. Ces tubes sont préférentiellement formés à partir de tubes ordinaires en matière plastique, assurant une réalisation simple et économique des assemblages.
Selon encore une autre disposition, le dispositif comprend une armature de support du toit central, qui comporte des poteaux reliés à leurs extrémités supérieures par des barres horizontales servant d'axe de pivot pour les panneaux de toit, ces éléments étant également réalisés en matière plastique. Les panneaux de toit sont articulés sur l'armature de support du toit central par des tubes fendus longitudinalement, formant un bord supérieur des panneaux, et engagés sur les barres horizontales, formées d'un tube reliant les poteaux.
Selon une disposition particulière, l'armature de support de toit est reliée aux parois extérieures par des profilés de section en creux, inclinés et situés au niveau des jonctions entre deux panneaux de toit adjacents et servant de gouttières. Ces gouttières jouent donc le rôle d'éléments de structure pour relier les parois extérieures et l'armature centrale de support de toit, et assurent aussi l'étanchéité de la construction pour empêcher l'eau de pluie d'y pénétrer.
Le toit central peut être réglable en hauteur par coulissement sur les poteaux de l'armature centrale, pour fournir une aération réglable du dispositif, en complément à des trappes d'aération, qui peuvent être aussi obturables, ménagées dans les parois ou les panneaux de toit. Egalement, des fenêtres transparentes sont préférentiellement ménagées dans les parois et/ou les panneaux de toit, pour permettre à l'éleveur d'observer ses poussins sans même soulever les dits panneaux de toit.
Préférentiellement, des filets sont tendus de manière amovible en dessous des panneaux de toit pour couvrir l'ouverture entre le toit central, les parois extérieures et les gouttières, lorsque les panneaux de toit sont ouverts, évitant ainsi que des oiseaux s'échappent par cette ouverture, mais permettant néanmoins à l'éleveur d'accéder à l'intérieur du dispositif en détachant un bord du filet, maintenu sur son pourtour par exemple par des petits câbles élastiques telles que de type sandows ou similaires.
Des vérins de maintien des panneaux de toit en position d'ouverture sont par ailleurs prévus pour en faciliter la manipulation.

D'autres caractéristiques et avantages apparaîtront dans la description qui va être faite de deux exemples de réalisation de l'invention.
On se reportera aux dessins annexés dans lesquels :
- la figure 1 est une vue schématique en coupe d'un premier mode de réalisation de l'invention,
- la figure 2 est une vue de dessus du dispositif selon ce premier mode de réalisation
- la figure 3 est une vue en perspective d'une cabane d'élevage selon une deuxième mode de réalisation du dispositif selon l'invention, tous les panneaux de toit étant fermés,
- la figure 4 est une vue similaire, mais avec un panneau de toit ouvert,
- la figure 5 est une vue partielle, à échelle agrandie, montrant notamment la gouttière à la liaison entre deux panneaux de toit,
- la figure 6 est une vue de détail en coupe selon la ligne VI-VI de la figure 5, montrant l'articulation d'un panneau de toit sur l'armature de support de toit,
- la figure 7 est une vue partielle de l'intérieure de la cabane montrant notamment une mangeoire et des abreuvoirs,
- la figure 8 est une vue en coupe illustrant la réalisation de la mangeoire dans un tube de structure,
- la figure 9 est une vue en coupe horizontale d'un tube de structure montrant notamment la liaison de ce tube avec les parois extérieures,
- la figure 10 est une vue en perspective d'un tube de structure, le panneau de toit étant ouvert, montrant l'utilisation de ce tube pour stocker la nourriture,
- la figure 11 illustre une face de la cabane, comportant des trappes de sorties des poussins.

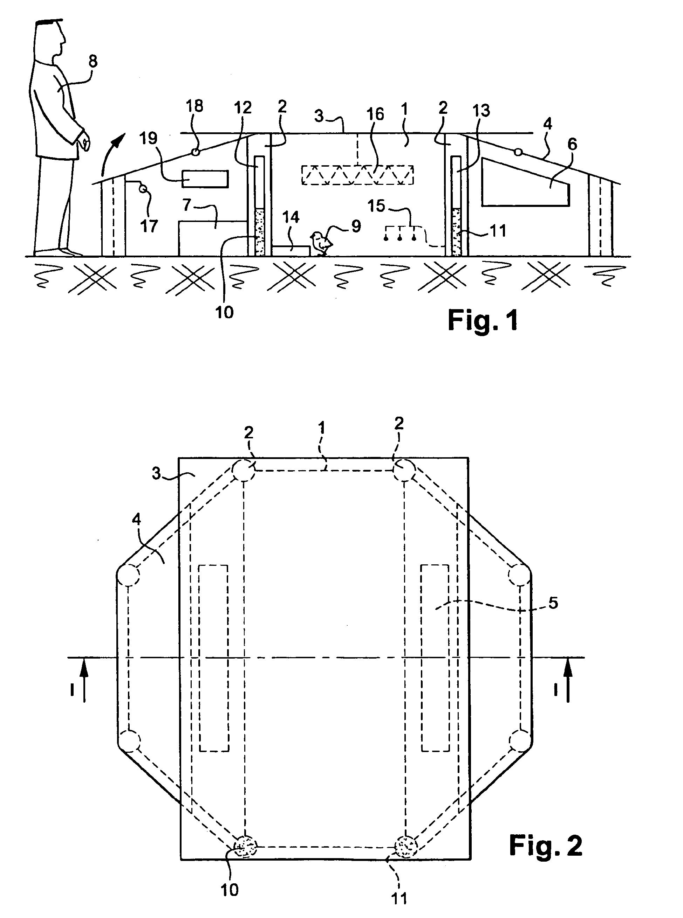

Dans le premier exemple de réalisation représenté figures 1 et 2, le dispositif comporte un corps formé d'une ossature, des parois extérieures isolantes 1 maintenues dans les angles par des tubes 2 qui permettent également de supporter le toit 3, dont la hauteur est définie en fonction de la taille des poussins 9. Le toit 3 est isolé, et mobile par translation pour permettre le remplissage des tubes 2 qui ont aussi pour fonction de stocker la nourriture 10 et la boisson 11. Un sous-toit 4 comporte des panneaux articulés selon un axe 18 et isolés, permettant l'accès de l'éleveur 8, qui peut effectuer la surveillance visuelle des poussins par des fenêtres 5 et 6 du sous toit et des parois du corps 1. Des trappes de sortie 7 permettent la sortie des poussins après quelques jours. Des trappes d'aération 19 permettent d'oxygéner le volume d'air à l'intérieur du corps, à l'intérieur duquel se trouvent disposés des mangeoires 14 et abreuvoirs 15, alimentés directement à partir des tubes 2, ainsi qu'un système de chauffage 16 et des ampoules d'éclairage 17.
Lorsque l'éleveur introduit des poussins à l'intérieur du corps, par les panneaux de sous-toit 4 articulés, il actionne le système de chauffage 16 et s'il le désire l'éclairage 17. Il stocke la nourriture 10 et la boisson 11 dans les tubes 2 qui alimentent les mangeoires 14 et les abreuvoirs 15, puis peut observer de l'extérieur les niveaux de nourriture 10 par des lumières 12 et les niveaux de boisson par des lumières 13, ménagées respectivement dans les tubes 2 correspondants.
L'éleveur peut surveiller les poussins par les fenêtres 5 du sous-toit ou celles 6 du corps. Il peut occasionnellement accéder, en passant ses bras et ses épaules uniquement, à l'intérieur du corps soit par le toit ou par les trappes de sous-toit.
Le toit peut être fixe ou mobile, et le corps et les tubes peuvent être fixés ou non sur un plancher.

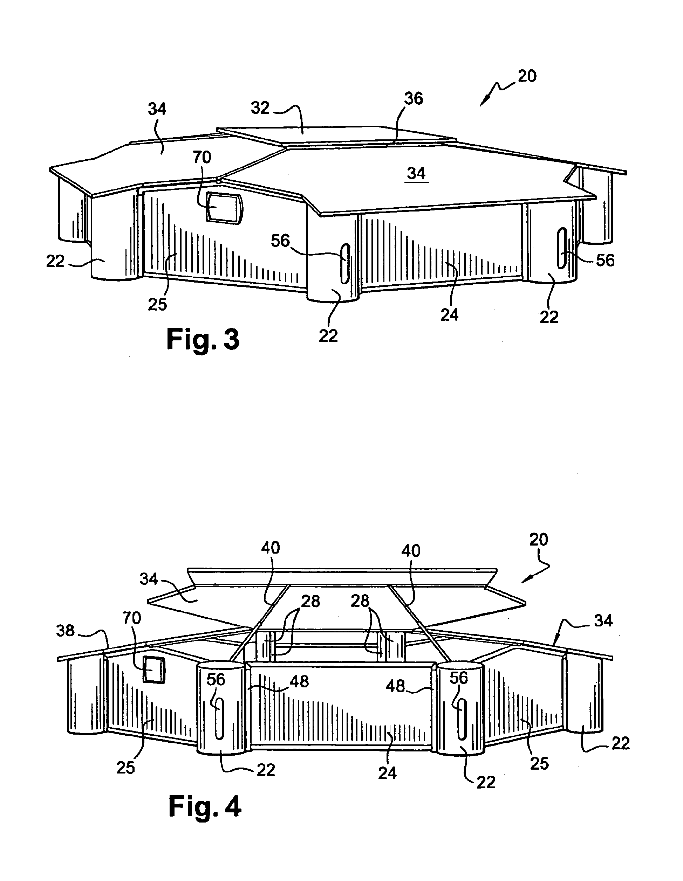

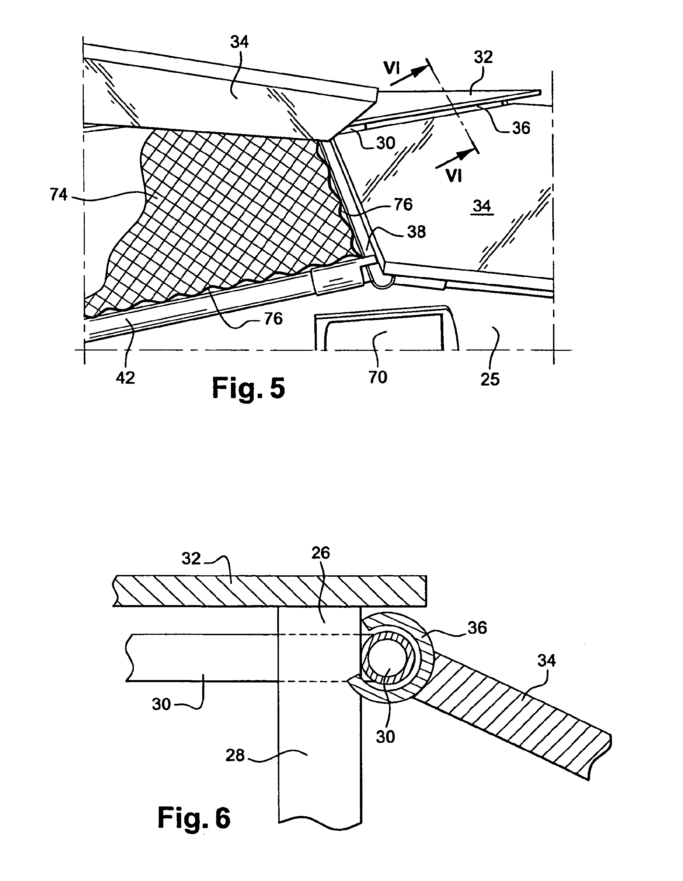

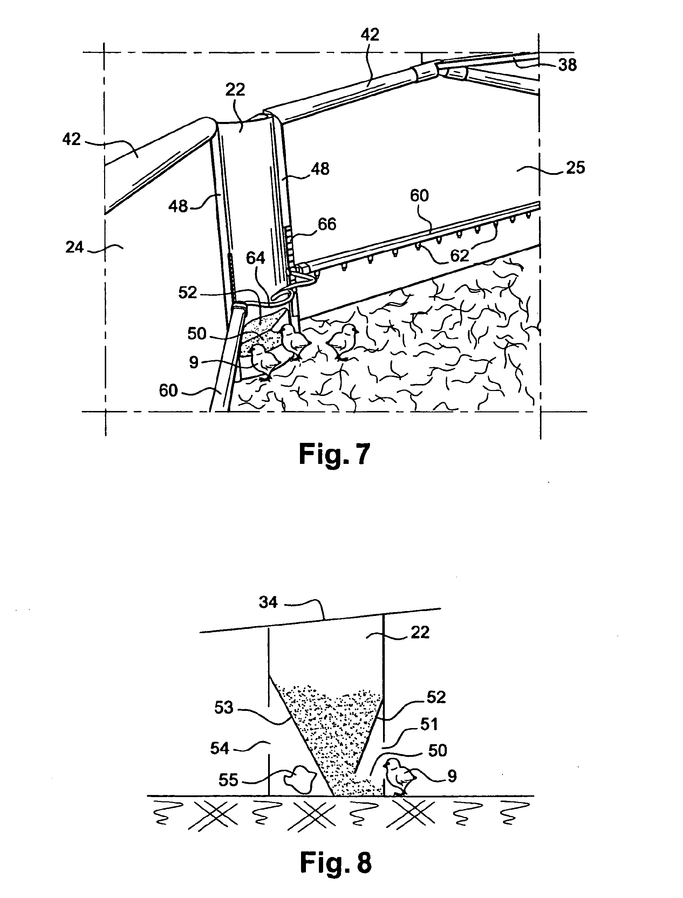

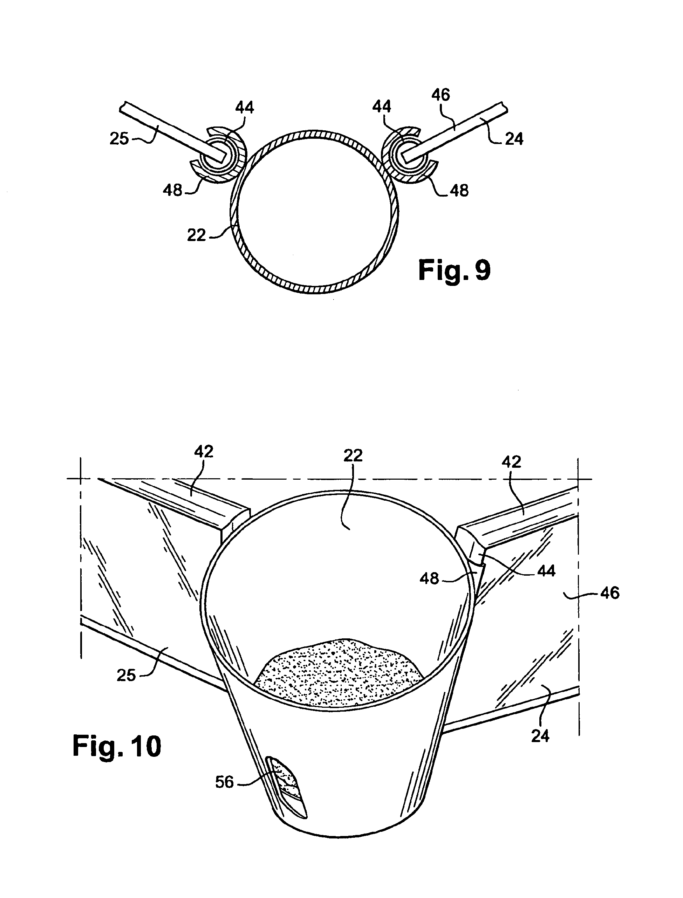

La cabane d'élevage 20 selon le deuxième exemple de réalisation est formée d'une ossature de tubes 22 en matière plastique, disposés verticalement et ouverts à leurs extrémités supérieures, ces tubes 22 étant reliés par des parois extérieures 24, 25, en un matériau thermiquement isolant, dont les formes spécifiques sont bien visibles figure 4. Dans l'exemple représenté, la cabane a une forme octogonale, cette forme n'étant nullement limitative de l'invention.
Une armature intérieure 26 , formée dans l'exemple décrit de quatre poteaux tubulaires 28 reliés à leurs extrémités supérieures par une barre ou un tube 30 plié en forme générale carrée, est située dans la partie centrale de la cabane. Cette armature sert de support pour le toit 32. Elle sert également de support pour les bords supérieurs de panneaux de toit 34 qui sont montés pivotant selon un axe horizontal par rapport à cette armature, de manière à pouvoir être soulevés par pivotement vers le haut comme représenté figure 4.
Les panneaux de toit 34 ont, comme on le voit bien sur la figure 3, une forme adaptée pour couvrir l'espace intérieur de la cabane, les parois 24 et les tubes 22. L'articulation des panneaux de toit 34 sur l'armature centrale de support 26 est préférentiellement réalisée, comme représenté figure 6, par emboîtement d'un tube horizontal fendu 36, fixé sur le bord supérieur d'un panneau 34, sur un côté du carré constitué par le tube 30. Cet emboîtement constitue une charnière assez facilement démontable en profitant de l'élasticité du tube fendu 36, permettant ainsi un montage et démontage aisé de la cabane. Cette charnière se trouve par ailleurs abritée par le bord du panneau de toit central 32, de sorte que l'étanchéité de la cabane à la pluie soit assurée.
Par ailleurs, chacun des angles supérieurs de l'armature centrale 26 est relié à une paroi extérieure 25 par une barre inclinée 38. Les barres inclinées 38 sont situées sous les lignes de jonction entre deux panneaux de toit 34 adjacents, et ont un profil en creux pour former une gouttière empêchant la pluie de pénétrer dans la cabane.
Les panneaux de toit 34 peuvent être maintenus en position d'ouverture, comme représenté figure 4, par des vérins à gaz 40 ou similaires, qui facilitent aussi la levée des dits panneaux.
Les parois 24, 25 sont formées de panneaux 46 de matériau isolant bordés par un cadre constitué préférentiellement de tubes fendus en matière plastique 42, 44 emboîtés à force sur les bords des panneaux isolants. Les parois 24, 25 sont assemblées sur les tubes 22, comme représenté figure 9, par emboîtement coulissant des tubes verticaux 44 du cadre des parois 24, 25 dans des tubes fendus 48 fixés sur les tubes de structure 22, en position adaptée en fonction de la forme générale de la cabane. Les parois 24, 25 ont des faces identiques, qui peuvent être placées indifféremment à l'intérieur ou à l'extérieur, ce qui permet de les inverser par simple coulissement vertical, ou déboîtement, par rapport aux tubes fendus 48 solidarisés sur les tubes de structure 22.
Certains au moins des tubes de structure 22 comportent à leur partie inférieure, du côté intérieur de la cabane, une mangeoire 50 constituée d'une découpe 51 réalisée dans la paroi du tube et de plaques 52, 53 disposées en V pour contrôler l'écoulement de la nourriture, de manière connue en soi. L'ouverture de la mangeoire peut aussi être ajustable. De plus, une découpe 54 peut être réalisée également en bas du tube 22 pour former un logement 55 ouvert vers l'extérieur, mais obturé vers l'intérieur par la plaque 53, où peuvent être disposés des appâts empoisonnés ou similaires à destination des prédateurs éventuels des poussins 9. Par ailleurs, le niveau de nourriture dans le tube 22 est rendu visible de l'extérieur par une lumière 56 réalisée verticalement dans la paroi du tube 22, du côté extérieur.
Des rampes d'abreuvoirs 60, pourvus de pipettes 62 sont disposées le long des parois 24, 25, comme on le voit figure 7. Ces rampes peuvent être reliées entre elles au niveau des tubes de structure 22 par des flexibles 64, et alimentées par un flexible similaire à partir d'un réservoir situé à l'extérieur de la cabane, facilement accessible pour pourvoir à son remplissage. La hauteur de ces rampes est ajustable, en fonction de la taille des poussins, par un système de crémaillères 66 fixées sur les tubes 22 et sur lesquelles sont maintenues les extrémités des rampes 60.
Comme on le voit figures 3 et 4, certaines au moins des parois 24 ou 25 comportent des fenêtres 70 qui peuvent permettre à l'éleveur de voir à l'intérieur de la cabane sans soulever les panneaux de toit, ou qui peuvent aussi servir à l'aération et être éventuellement obturées par des trappes coulissantes ou pivotantes.

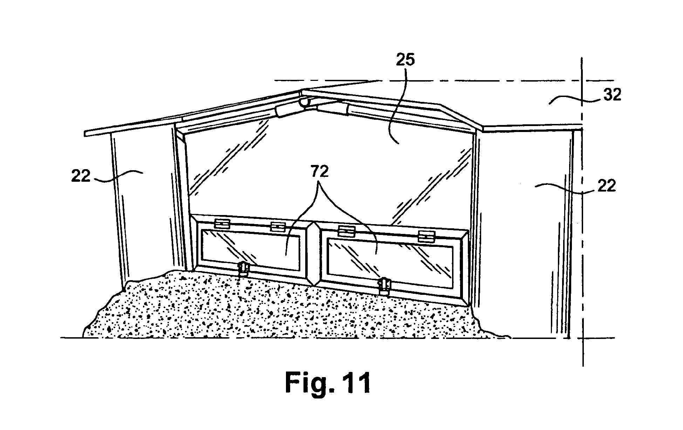

Comme on le voit figure 11, au moins une des parois 24 ou 25 comporte des trappes de sortie 72 montées sur charnières, pour permettre aux poussins d'entrer et sortir dans la cabane, leur donnant accès à un parc clos, et qui peuvent être protégés par un rideau coupe-vent installé devant les trappes de sortie.
La cabane est par ailleurs équipée des moyens de chauffage et d'éclairage nécessaires, de type connus en soi.
Des filets 74 sont préférentiellement disposés, comme montré figure 5, sous les panneaux de toit 34, leurs bords étant fixés de manière démontable, par exemple par des Sandows ® 76, sur les tubes supérieurs 42 bordant les parois 24, 25, sur les gouttières 38 et au niveau des charnières 36.
L'invention n'est pas limitée aux modes de réalisation qui ont été décrits ci-dessus uniquement à titre d'exemples. En particulier, le nombres de tubes de structure et de parois pourra être modifié, en conservant les mêmes tubes grâce à la latitude de positionnement angulaire des parois par rapport aux dits tubes, offerte par le système d'emboîtement des parois dans les tubes fendus 48, ou en adaptant les dits tubes selon besoin. Egalement, la hauteur des cabanes pourra être adaptée en fonction de la taille des oiseaux.
Le toit central peut être réglable en hauteur par coulissement sur les poteaux de l'armature centrale, le réglage en hauteur pouvant être manuel ou automatisé, pour fournir une aération réglable du dispositif, en complément aux trappes d'aération.

## Revendications

1. Dispositif d'élevage de poussins de volaille ou gibier à plumes, formé d'une construction (20) comportant une ossature, des parois extérieures (1; 24, 25), un toit central(3, 32), des panneaux de toit (4, 34) articulés selon des axes sensiblement horizontaux et pivotant vers le haut en position d'ouverture pour donner accès à l'éleveur à l'intérieur de la construction sans qu'il ait besoin d'y pénétrer, **caractérisé en ce que** l'ossature comporte des tubes de structure (2, 22) verticaux situés dans les angles et sur lesquels se raccordent par emboîtement démontable les parois extérieures (1, 24, 25), au moins un des tubes de structure verticaux étant ouvert vers son extrémité supérieure pour y introduire de la nourriture (10) qui est distribuée vers son extrémité inférieure conformée en mangeoire (14, 50), et les panneaux de toit (4, 34) recouvrant en position basse les parois (1, 24, 25) et les tubes de structure (2, 22).

2. Dispositif d'élevage selon la revendication 1, **caractérisé en ce que** les tubes de structure (2, 22) comportent une fenêtre (12, 56) verticale transparente située vers l'extérieur de la construction, pour visualiser le niveau de nourriture.

3. Dispositif d'élevage selon la revendication 1, **caractérisé en ce que** des rampes d'abreuvoir (15, 60) sont disposées le long de certaines au moins des parois (1, 24, 25) à l'intérieur de la construction.

4. Dispositif d'élevage selon la revendication 1, **caractérisé en ce que** les parois extérieures (24, 25) sont liées aux tubes de structure (22) par emboîtement de montants latéraux (44) des dites parois dans des tubes de liaison (48) fendus longitudinalement fixés à demeure sur les dits tubes de structure, parallèlement à ceux-ci.

5. Dispositif d'élevage selon la revendication 1, **caractérisé en ce qu'**il comprend une armature (26) de support du toit central (32), qui comporte des poteaux (28) reliés à leurs extrémités supérieures par des barres horizontales (30) servant d'axe de pivot pour les panneaux de toit (34).

6. Dispositif d'élevage selon la revendication 5, **caractérisé en ce que** les panneaux de toit (34) sont articulés sur l'armature de support du toit central par des tubes (36) fendus longitudinalement, formant un bord supérieur des panneaux (34), et engagés sur les barres horizontales, formées d'un tube (30) reliant les poteaux (28).

7. Dispositif d'élevage selon la revendication 1, **caractérisé en ce que** le toit central (32) est réglable en hauteur.

8. Dispositif d'élevage selon la revendication 5, **caractérisé en ce que** l'armature (26) de support de toit est reliée aux parois extérieures (24, 25) par des profilés (38) de section en creux situés au niveau des jonctions entre deux panneaux de toit (34) adjacents et servant de gouttières.

9. Dispositif d'élevage selon la revendication 8, **caractérisé en ce que** des filets (74) sont tendus de manière amovible en dessous des panneaux de toit (34) pour couvrir l'ouverture entre le toit central, les parois extérieures et les gouttières.

10. Dispositif d'élevage selon la revendication 1, **caractérisé en ce qu'**il comporte des vérins (40) de maintien des panneaux de toit (34) en position d'ouverture.

## Claims

1. Device for rearing chicks of poultry or game birds, formed by a structure (20) comprising a framework, outer walls (1; 24, 25), a central roof (3, 32), roof panels (4, 34) which are articulated according to substantially horizontal axes, and pivot upwards in the open position in order to provide the breeder with access to the interior of the structure without his needing to enter into it, **characterised in that** the framework comprises vertical structural tubes (2, 22) which are situated at the angles, and to which the outer walls (1, 24, 25) are connected by being fitted in a detachable manner, at least one of the vertical structural tubes being open at its upper end for the introduction into it of the food (10) which is distributed at its lower end in the form of a feeding trough (14, 50), and the roof panels (4, 34) cover in the lowered position the walls (1, 24, 25) and the structural tubes (2,22).

2. Rearing device according to claim 1, **characterised in that** the structural tubes (2, 22) comprise a transparent vertical window (12, 56) which is situated towards the exterior of the structure, in order to show the food level.

3. Rearing device according to claim 1, **characterised in that** the drinking-trough ramps (15, 60) are disposed along at least some of the walls (1, 24, 25) in the interior of the structure.

4. Rearing device according to claim 1, **characterised in that** the outer walls (24, 25) are connected to the structural tubes (22) by fitting of lateral uprights (44) of the said walls in connection tubes (48) which are split longitudinally and are permanently fixed to the said structural tubes, parallel to the latter.

5. Rearing device according to claim 1, **characterised in that** it comprises a frame (26) to support the central roof (32), which comprises posts (28) which are connected at their upper ends by horizontal bars (30) which act as an axis of pivoting for the roof panels (34).

6. Rearing device according to claim 5, **characterised in that** the roof panels (34) are articulated on the support frame of the central roof by tubes (36) which are split longitudinally, thus forming an upper edge of the panels (34), and are engaged on the horizontal bars formed by a tube (30) which connects the posts (28).

7. Rearing device according to claim 1, **characterised in that** the height of the central roof (32) is adjustable.

8. Rearing device according to claim 5, **characterised in that** the roof support frame (26) is connected to the outer walls (24, 25) by profiles (38) with a hollow section which are situated at the level of the joins between two adjacent roof panels (34), and act as gutters.

9. Rearing device according to claim 8, **characterised in that** nets (74) are stretched in a removable manner below the roof panels (34) in order to cover the opening between the central roof, the outer walls and the gutters.

10. Rearing device according to claim 1, **characterised in that** it comprises jacks (40) to maintain the roof panels (34) in the open position.

## Patentansprüche

1. Vorrichtung zur Aufzucht von Geflügel- oder Federwildküken, bestehend aus einer Konstruktion (20), die ein Gerüst umfasst, Außenwände (1; 24, 25), ein zentrales Dach (3, 32), um im Wesentlichen horizontale Achsen angelenkte Dachplatten (4, 34), die nach oben in eine offene Stellung kippen, um dem Züchter Zugang zum Inneren der Konstruktion zu gewähren, ohne dass er sich hinein begeben müsste, **dadurch gekennzeichnet, dass** das Gerüst vertikale Konstruktionsrohre (2, 22) aufweist, die sich in den Ecken befinden und an denen durch Einstecken die Außenwände (1, 24, 25) zerlegbar befestigt werden, wobei mindestens eins der vertikalen Konstruktionsrohre an seinem oberen Ende offen ist, um Futter (10) einzufüllen, das gegen sein unteres Ende ausgegeben wird, das als Futterbank (14, 50) geformt ist, und die Dachplatten (4, 34) in der abgesenkten Stellung die Wände (1, 24, 25) und die Konstruktionsrohre (2, 22) abdecken.

2. Aufzuchtvorrichtung nach Patentanspruch 1, **dadurch gekennzeichnet, dass** die Konstruktionsrohre (2, 22) ein vertikales, durchsichtiges Fenster (12, 56) aufweisen, das nach außerhalb der Konstruktion weisend angeordnet ist, um den Futterstand zu zeigen.

3. Aufzuchtvorrichtung nach Patentanspruch 1, **dadurch gekennzeichnet, dass** Tränkrinnen (15, 60) an mindestens bestimmten Wänden (1, 24, 25) entlang im Inneren der Konstruktion angeordnet sind.

4. Aufzuchtvorrichtung nach Patentanspruch 1, **dadurch gekennzeichnet, dass** die Außenwände (24, 25) mit den Konstruktionsrohren (22) durch Einstecken von Seitenstützen (44) der genannten Wände in Verbindungsrohre (48) verbunden sind, die in Längsrichtung aufgeschlitzt und an den genannten Konstruktionsrohren parallel zu diesen auf Dauer befestigt sind.

5. Aufzuchtvorrichtung nach Patentanspruch 1, **dadurch gekennzeichnet, dass** sie eine Anordnung (26) zum Tragen des Zentraldaches (32) umfasst, die Stützen (28) umfasst, die an ihren oberen Enden durch horizontale Stangen (30) verbunden sind, die den Dachplatten (34) als Kippachsen dienen.

6. Aufzuchtvorrichtung nach Patentanspruch 5, **dadurch gekennzeichnet, dass** die Dachplatten (34) durch in Längsrichtung aufgeschlitzte Rohre (36) an die Trageanordnung des Zentraldaches angelenkt sind, die einen oberen Rand der Platten (34) bilden und die horizontalen Stangen übergreifen, die aus einem Rohr (30) bestehen, das die Stützen (28) verbindet.

7. Aufzuchtvorrichtung nach Patentanspruch 1, **dadurch gekennzeichnet, dass** das Zentraldach (32) höhenverstellbar ist.

8. Aufzuchtvorrichtung nach Patentanspruch 5, **dadurch gekennzeichnet, dass** die Trageanordnung (26) des Daches durch Profile (38) mit hohlem Querschnitt mit den Außenwänden (24, 25) verbunden ist, die sich im Bereich der Verbindungen zwischen zwei aneinander anschließenden Dachplatten (34) befinden und als Regenrinne dienen.

9. Aufzuchtvorrichtung nach Patentanspruch 8, **dadurch gekennzeichnet, dass** Netze (74) abnehmbar unter den Dachplatten (34) aufgespannt sind, um die Öffnung zwischen dem Zentraldach, den Außenwänden und den Regenrinnen abzudecken.

10. Aufzuchtvorrichtung nach Patentanspruch 1, **dadurch gekennzeichnet, dass** sie Zylinder (40) zum Halten der Dachplatten (34) in der offenen Stellung aufweist.
